# EUROPÄISCHE PATENTANMELDUNG

(11) **EP 1 075 091 A1**
(43) Veröffentlichungstag der Anmeldung: **07.02.2001**
(21) Anmeldenummer: 00115738.7
(22) Anmeldetag: 21.07.2000
(51) Int. Cl.: H04B 3/56

(54) **Verfahren zum Betreiben von zur Energieverteilung vorgesehenen Niederspannungsnetzen zur Datenübertragung, zugehörige Schaltung und Anordnung mit einer solchen Schaltung**

(30) Priorität: 22.07.1999 DE 19934334
(71) Anmelder: SIEMENS AKTIENGESELLSCHAFT, 80333 München (DE)
(72) Erfinder: Griepentrog, Gerd, Dr., 91058 Erlangen (DE); Maier, Reinhard, Dr., 91074 Herzogenaurach (DE); Meusling, Askold, Dr., 86307 Holzkirchen (DE); Schmidt, Richard, Dipl.-Ing., 91083 Baiersdorf (DE)

(57) **Zusammenfassung**

Um Niederspannungsverteilungsnetze für die Datenübertragung zu verwenden, ist eine geeignete Konditionierung notwendig. Erfindungsgemäß werden zum Aufbau eine Konditionier-Schaltung ausschließlich Impedanzen im Querzweig der Leiter verwendet. Es kann so eine Adaption der Impedanzen an die jeweiligen Bedürfnisse im laufenden Betrieb erfolgen. Mit zugehörigen Schaltungen wird eine Abschlussimpedanz (10) am Ende einer Leitung (1) oder eine Anpassimpedanz (30) zwischen zwei Leitungen (1, 2) realisiert, die in eigenen Gehäusen oder aber auch in den Gehäusen von vorhandenen Schutzschaltern angeordnet sein können.

## Beschreibung

Die Erfindung bezieht sich auf ein Verfahren zum Betreiben von als Energieverteilnetz vorgesehenen Niederspannungsnetzen zur Datenübertragung, wobei eine Konditionierung des Netzes erfolgt. Daneben bezieht sich die Erfindung auch auf die zugehörige Schaltung zur Ausführung des Verfahrens und auf eine diesbezügliche Anordnung mit einer solchen Schaltung.

Die Übertragung von Daten auf Energieleitungen, die in der Fachwelt als PLC (Power Line Communication) bezeichnet wird, gewinnt in der technischen Diskussion zunehmend an Bedeutung. Allerdings sind insbesondere die in der Praxis vorhandenen Niederspannungsnetze nicht zur Übertragung von Daten, sondern vielmehr für die Übertragung von Energie in Form niederfrequenter Ströme und Spannungen, d.h. im Bereich von 50 bzw. 60 Hz, ausgelegt. Um praktisch relevante Übertragungsdaten erzielen zu können, sind hingegen höhere Frequenzen, vorzugsweise im Bereich von einigen kHz bis in den MHz-Bereich, notwendig.

Letztere hochfrequenten Signale lassen sich in den vorhandenen Energieverteilungsnetzen nur sehr eingeschränkt übertragen: Einerseits ist der elektrische Widerstand des Niederspannungsnetzes für die hochfrequenten Signale höher und andererseits behindern speziell Reflexions- und Brechungserscheinungen der hochfrequenten Signale an Verbindungs- und Abzweigstellen sowie an den offenen Enden der Leitungen die Signalausbreitung. Daneben werden diese Signale durch am Niederspannungsnetz angeschlossene Verbraucher gestört.

Um eine industrielle Datenübertragung auf Energieverteilnetzen zu ermöglichen sind verschiedene Strategien möglich, die sich unter Umständen ergänzen können: Grundsätzlich müssen störsichere Übertragungs- bzw. Modulationsverfahren angewendet werden. Weiterhin muss die Sendeleistung erhöht werden. Schließlich müssen die Signalübertragungseigenschaften des Energienetz verbessert werden, was unter dem Begriff der sogenannten Konditionierung zusammengefasst wird.

In den Zeitschriften-Veröffentlichungen 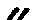 *Daten über Stromnetze" aus Funkschau (1998) 12, Seiten 22 bis 27* und 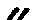 *Daten im Strom" aus c't (1998), Heft 11, Seiten 174 bis 180* werden bereits eine Reihe von allgemeinen Hinweisen für eine industrielle Nutzung der PLC, mit denen Niederspannungsnetze für die Übertragung von Daten ertüchtigt bzw. konditioniert werden können, gegeben. Konkrete schaltungstechnische Realisierungsvorschläge sind dort allerdings nicht angegeben.

Stand der Technik ist, dass Leitungen, die ausschließlich zur Übertragung von Daten vorgesehen und geeignet sind, bestimmten Anforderungen wie Verzerrungsfreiheit, Verhinderung von Reflexionen an den Leitungsenden, beispielsweise durch Abschlusswiderstände od. dgl., genügen müssen. Daneben ist es vom Stand der Technik auch bekannt, Netzabschnitte des Energieverteilnetzes, die zur Übertragung von Daten vorgesehen sind, durch Filterschaltungen gegen Störungen aus anderen Netzabschnitten zu schützen sowie das Abfließen der Signalleistung des Trägersignals zu verhindern. Solche Filterkreise enthalten Impedanzen, vorzugsweise Induktivitäten, in Längsrichtung, welche in Verbindung mit dem betriebsmäßigen netzfrequenten Strom zu hohen Verlusten führen.

Aufgabe der Erfindung ist es demgegenüber, geeignete Maßnahmen zur Konditionierung anzugeben, die nicht zur Erhöhung der Verlustleistung im Energieverteilnetz führen.

Die Aufgabe ist erfindungsgemäß dadurch gelöst, dass zur Konditionierung des Energieverteilnetzes ausschließlich Impedanzen im Querzweig verwendet werden. Vorteilhafterweise können solche Impedanzen gewählt werden, bei denen eine Anpassung an die jeweiligen Bedürfnisse möglich ist, wodurch die Impedanzen im Querzweig des Netzes vorteilhafterweise bei laufendem Betrieb adaptiert werden können.

Mit der Erfindung wird gewährleistet, dass die Verlustleistung im Energieverteilnetz nicht erhöht wird, da die Konditioniermaßnahmen immer quer zu den Leitern in Form sogenannter Konditionierschaltungen angebracht werden. Vorzugsweise sind bei solchen Schaltungen drei Abschlusswiderstände durch Koppelkapazitäten zwischen den Außenleitern des Niederspannungsnetzes und dem Neutralleiter vorhanden.

Bei der Erfindung kann es aus Kostengründen vorteilhaft sein, wenn die Konditionierschaltungen ausschließlich mit passiven Bauelementen ausgeführt sind. Für die praktische Anwendung einer Konditionier-Schaltung ist es sinnvoll, diese jeweils in einem eigenen Gehäuse anzuordnen. Solche Gehäuse können beispielsweise auf einer Hutschiene angebracht sein und somit leicht in Schaltschränke eingebaut werden. Es sind auch andere Einheiten mit solchen Schaltungen kombinierbar und adaptierbar.

Weitere Einzelheiten und Vorteile der Erfindung ergeben sich aus der nachfolgenden Figurenbeschreibung von Ausführungsbeispielen anhand der Zeichnung in Verbindung mit weiteren Patentansprüchen. Es zeigen
- Figur 1: die schaltungsmäßige Gestaltung einer Abschlussimpedanz zur Verwendung bei PLC und
- Figur 2: die schaltungsmäßige Gestaltung einer Anpass-Impedanz zur Kopplung von Niederspannungsleitungen mit unterschiedlichem Wellenwiderstand.

Gleiche bzw. gleichwirkende Einheiten haben in den Figuren gleiche Bezugszeichen.

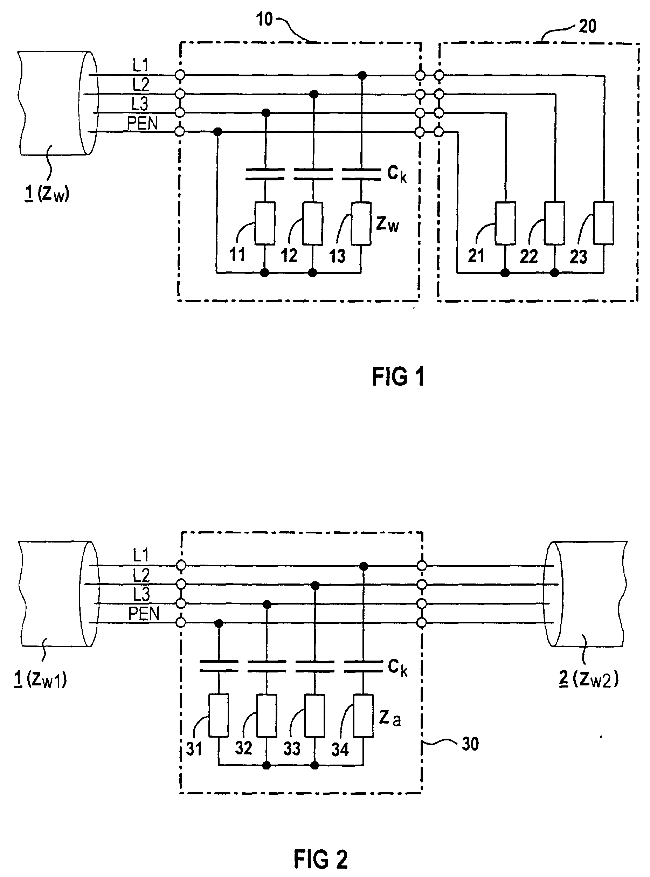

In Figur 1 ist mit 1 eine dreiphasige Leitung mit Wellenwiderstand Z_{W} bezeichnet. Die Leitung 1 besteht aus einzelnen Phasenleitern L1, L2, L3 und einem Neutralleiter PEN.

An die Leitung 1 mit Wellenwiderstand Z_{W} soll eine dreiphasige Last im Niederspannungsnetz angeschlossen werden, die pauschal mit 20 mit Widerständen 21, 22, 23 bezeichnet ist. Dazu ist eine Konditionierschaltung vorgesehen, die als Einheit 10 mit einer Abschlussimpedanz gestaltet ist.

Zur Realisierung der Abschlussimpedanz in Figur 1 sind zwischen den Außenleitern L1, L2 und L3 und dem Neutralleiter PEN über Koppelkapazitäten C_{K} drei Abschlusswiderstände 11, 12, 13 angeschlossen. Die Abschlusswiderstände 11, 12, 13 müssen dabei nicht notwendigerweise rein ohm'sche Widerstände sein, sondern können vielmehr jeweils eine komplexe Impedanz Z_{W} darstellen, die dem Wellenwiderstand der Zuleitung 1 entspricht. Die Koppelkapazitäten C_{K} betragen vorzugsweise höchstens einige 100 nFd, so dass die netzfrequente Spannung wirksam von den Abschlusswiderständen 11, 12, 13 ferngehalten wird, dagegen die trägerfrequente Spannung des Signals weitestgehend ungehindert passieren kann.

Eine andere Anwendung von Konditioniermaßnahmen und insofern eine andere Anpassschaltung wird notwendig, wenn Leitungen, Kabel, Schienensysteme oder dgl. mit jeweils unterschiedlichen Wellenwiderständen zu koppeln sind. Ohne zusätzliche Maßnahmen kommt es an solchen Koppelpunkten zu Reflexionen des Datensignals. Letzteres kann durch eine Anpass-Impedanz gemäß Figur 2 weitgehend reduziert werden kann.

In Figur 2 ist eine erste Leitung mit Wellenwiderstand Z_{W1} wiederum mit 1 bezeichnet, die aus den Phasenleitern L1, L2, L3 und dem Neutralleiter PEN besteht. Eine zweite Leitung mit Phasenleitern L1, L2, L3 und Neutralleiter PEN ist hier mit 2 bezeichnet und hat den Wellenwiderstand Z_{W2}. In diesem Fall ist eine Einheit 30 mit einer Anpass-Impedanz vorhanden.

Zur Realisierung der Anpass-Impedanz sind in Figur 2 an den einzelnen Außenleitern und dem Neutralleiter über Koppelkapazitäten C_{K} Anpasswiderstände 31 bis 34 angeschlossen und rückseitig kurzgeschlossen. Auch in diesem Fall betragen die Koppelkapazitäten einige 100 nFd. Der Betrag der Anpassimpedanzen Zₐ wird vorzugsweise zwischen denen der Wellenwiderstände Z_{W1} und Z_{W2} der zu verbindenden Leitungen 1 und 2 liegen.

In Energieverteilnetzen ist mit zeitlich veränderlichen Parametern der Netzimpedanzen, mit wechselnden Lastfällen und mit Störeinflüssen zu rechnen. Um diesen Änderungen zu begegnen, können die Parameter der Konditionier-Schaltungen an die jeweiligen Verhältnisse des Energieverteilnetzes angepasst werden. Dies kann beispielsweise dadurch erfolgen, dass man die über das Energieverteilnetz übertragenen Datensignale, die in der Konditionier-Schaltung empfangen werden, speziell hinsichtlich der spektralen Leistungsdichte auswertet. Auf der Grundlage einer solchen Auswertung kann dann eine Adaption der Schaltung insoweit erfolgen, dass die Impedanzen an die jeweiligen Bedürfnisse angepasst werden. Dabei ist eine Adaption bei laufendem Betrieb möglich.

Die anhand der Figuren 1 und 2 beschriebenen Schaltungen können für die praktische Anwendung der Konditionierung von Energieverteilnetzen in einem separaten Gehäuse angeordnet sein, welches beispielsweise mit anderen Schalteinheiten auf eine fahrende Hutschiene aufreihbar ist und so leicht in Schaltschränke eingebaut werden kann. Es ist auch möglich, die Schaltungen als gerätetechnische Einheit mit vorhandenen Schaltgeräten, wie Leitungsschutzschaltern, Fehlerstrom-Schutzschalter oder dgl. zu kombinieren. Schließlich ist es möglich, die Schaltung in einem Steckergehäuse oder in Form eines Steckdosen-Adapters als Zwischenstecker vorzusehen. Solche Stecker können beispielsweise am Hausanschlusskasten angeordnet sein.

Wesentlich ist beim vorbeschriebenen Konditionierverfahren und den zugehörigen Schaltungen, dass die Methodik der Nachrichtentechnik speziell auf Energieverteilnetze angewandt wird, um deren Eigenschaften zur Übertragung von Daten zu verbessern.

Die mit der Erfindung realisierte dynamische Anpassung der Konditionierungsschaltung durch das Regeln der Impedanz ist besonders vorteilhaft, wenn sie durch die Auswertung des Übertragungsverhaltens der Leitung in einer abgeschlossenen Kommunikationseinheit erfolgt.

## Patentansprüche

1. Verfahren zum Betreiben von als Energieverteilnetz vorgesehenen Niederspannungsnetzen zur Datenübertragung, wozu eine Konditionierung des Netzes vorgesehen ist, **dadurch gekennzeichnet**, dass zur Konditionierung ausschließlich Impedanzen im Querzweig verwendet werden.

2. Verfahren nach Anspruch 1, **dadurch gekennzeichnet**, dass die Impedanzen bei laufendem Betrieb an die jeweiligen Bedürfnisse angepasst werden.

3. Schaltung zur Ausführung des Verfahrens nach Anspruch 1 oder des Verfahrens nach Anspruch 2, **dadurch gekennzeichnet**, dass zur Realisierung einer Abschlussimpedanz (10) drei Abschlusswiderstände (11 bis 13), deren Impedanz (Z_{W}) dem Wellenwiderstand der Zuleitung entspricht, über Koppelkapazitäten (C_{K}) zwischen den Außenleitern (L1, L2, L3) und dem Neutralleiter (PEN) angeschlossen sind.

4. Schaltung zur Ausführung des Verfahrens nach Anspruch 1 oder des Verfahrens nach Anspruch 2, **dadurch gekennzeichnet,** dass zur Realisierung einer Anpass-Impedanz (30) vier Abschlusswiderstände (21 bis 24) über Koppelkapazitäten (C_{K}) an die Außenleiter (L1, L2, L3) und den Neutralleiter (PEN) angeschlossen und rückseitig kurzgeschlossen sind.

5. Schaltung nach Anspruch 3 oder Anspruch 4, **dadurch gekennzeichnet,** dass die Abschlusswiderstände (11 bis 13, 21 bis 24) eine komplexe Impedanz (Z_{W}, Zₐ) haben.

6. Schaltung nach einem der Ansprüche 3 bis 5, **dadurch gekennzeichnet,** dass Mittel zur Adaption des Abschlusswiderstandes (10) und/oder des Anpasswiderstandes (30) vorhanden sind.

7. Schaltung nach Anspruch 6, **dadurch gekennzeichnet,** dass die Mittel zur Adaption von über das Energieverteilnetz übertragenen Datensignalen abgeleitet werden.

8. Schaltung nach Anspruch 6 oder Anspruch 7, **dadurch gekennzeichnet**, dass für die Mittel zur Adaption die spektrale Leistungsdichte der übertragenen Datensignale ausgewertet wird.

9. Anordnung zur Aufnahme einer Schaltung nach einem der Ansprüche 3 bis 8, mit der ein Verfahren gemäß Anspruch 1 oder Anspruch 2 ausgeführt wird, **dadurch gekennzeichnet**, dass die Konditionier-Schaltung (10, 20) in einem eigenen Gehäuse angeordnet ist.

10. Anordnung nach Anspruch 9, **dadurch gekennzeichnet**, dass das Gehäuse auf in Schaltschränken vorhandenen Hutschienen aufreihbar ist.

11. Anordnung zur Aufnahme einer Schaltung nach einem der Ansprüche 3 bis 8, **dadurch gekennzeichnet**, dass die Konditionier-Schaltung (10, 20) in das Gehäuse eines vorhandenen Schalters eingebaut ist.

12. Anordnung zur Aufnahme einer Schaltung nach einem der Ansprüche 3 bis 8, **dadurch gekennzeichnet**, dass die Konditionier-Schaltung in einem separaten Steckergehäuse angeordnet ist.
